# FASCICULE DE BREVET EUROPEEN

(11) **EP 3 575 486 B1**
(45) Date de publication et mention de la délivrance du brevet: **27.01.2021**
(21) Numéro de dépôt: 19173580.2
(22) Date de dépôt: 09.05.2019
(51) Int. Cl.: D06F 75/26, D06F 75/12

(54) **APPAREIL DE REPASSAGE ÉQUIPÉ D'UN ORGANE DE COMMANDE DE VAPEUR**
BÜGELGERÄT, DAS MIT EINEM DAMPFSTEUERORGAN AUSGESTATTET IST
IRONING DEVICE PROVIDED WITH A STEAM CONTROL UNIT

(30) Priorité: 31.05.2018 FR 1854734
(43) Date de publication de la demande: 04.12.2019
(73) Titulaire: SEB S.A., 69130 Ecully (FR)
(72) Inventeur: NAPOLI, Thierry, 38780 Estrablin (FR); LUC, David, 38138 Les Côtes d'Arey (FR)
(74) Mandataire: SEB Développement

(56) Documents cités:
- EP-A1- 3 266 926
- WO-A2-01/55496

## Description

### Domaine technique

La présente invention concerne le domaine des appareils de repassage, et en particulier des appareils de repassage équipés d'organes de commande de vapeur.

### Etat de la technique

Un appareil de repassage comprend de façon connue :
- un réservoir d'eau,
- un fer à repasser comprenant une chambre de vaporisation reliée fluidiquement au réservoir d'eau, une résistance électrique chauffante configurée pour chauffer la chambre de vaporisation, et une semelle de repassage équipée d'une surface de repassage et d'orifices de sortie de vapeur débouchant dans la surface de repassage et reliés à la chambre de vaporisation,
- une pompe d'alimentation reliée fluidiquement au réservoir d'eau et configurée pour alimenter en eau la chambre de vaporisation,
- une gâchette de commande de vapeur destinée à être actionnée manuellement par un utilisateur et configurée pour commander une alimentation en eau de la chambre de vaporisation,
- un circuit de commande de débit relié à la gâchette de commande de vapeur et configuré pour piloter le fonctionnement de la pompe d'alimentation en fonction de la position occupée par la gâchette de commande de vapeur.

Un tel appareil est par exemple décrit dans les demandes WO 01/55496 ou EP 3 266 926.

Un tel appareil de repassage est plus particulièrement configuré de telle sorte qu'un actionnement de la gâchette de commande de vapeur provoque la mise en marche de la pompe d'alimentation et une alimentation en eau de la chambre de vaporisation, et de telle sorte qu'un relâchement de la gâchette de commande de vapeur provoque l'arrêt de la pompe d'alimentation et une interruption de l'alimentation en eau de la chambre de vaporisation.

Ainsi, lors de l'actionnement de la gâchette de commande de vapeur par un utilisateur, de l'eau est injectée dans la chambre de vaporisation et cette eau est vaporisée au contact des parois intérieures de la chambre de vaporisation de manière à produire un flux de vapeur qui est expulsé à l'extérieur du fer à repasser via les orifices de sortie de vapeur.

Toutefois, afin d'éviter une saturation en eau de la chambre de vaporisation et une projection d'eau sur le linge à repasser, le débit d'alimentation en eau de la chambre de vaporisation est généralement assez faible.

Par conséquent, l'efficacité de repassage d'un tel appareil de repassage peut s'avérer insatisfaisante.

### Résumé de l'invention

La présente invention vise à remédier à tout ou partie de ces inconvénients.

Le problème technique à la base de l'invention consiste notamment à fournir un appareil de repassage présentant une efficacité de repassage améliorée, tout en limitant les risques de projection d'eau sur un linge à repasser.

A cet effet, la présente invention concerne un appareil de repassage comprenant un réservoir d'eau, un fer à repasser comportant une chambre de vaporisation pour la production de vapeur, une pompe d'alimentation reliée fluidiquement au réservoir d'eau et configurée pour alimenter en eau la chambre de vaporisation, un organe de commande de vapeur destiné à être actionné manuellement par un utilisateur et configuré pour commander une alimentation en eau de la chambre de vaporisation lorsque l'organe de commande de vapeur est actionné, et un circuit de commande de débit relié à l'organe de commande de vapeur et configuré pour piloter le fonctionnement de la pompe d'alimentation, caractérisé en ce que l'organe de commande de vapeur est configuré pour commander la communication d'un signal d'activation au circuit de commande de débit lorsque l'organe de commande de vapeur est actionné, et en ce que le circuit de commande de débit est configuré pour piloter la pompe d'alimentation selon un programme de régulation de débit lorsqu'un signal d'activation est communiqué au circuit de commande de débit, le programme de régulation de débit comportant une série d'au moins trois phases de régulation de débit qui sont successives, le débit moyen de la pompe d'alimentation étant régulé, durant chaque phase de régulation de débit, autour d'un débit de consigne respectif, les valeurs des débits de consigne diminuant d'une phase de régulation de débit à une phase de régulation de débit suivante. Ces dispositions permettent d'optimiser le cycle de pompage de la pompe d'alimentation en fonction du temps d'actionnement de l'organe de commande de vapeur, et donc d'injecter un maximum d'eau dans la chambre de vaporisation tout en limitant les risques de projection d'eau sur le linge à repasser. Ainsi, ces dispositions permettent d'optimiser les performances vapeur de l'appareil de repassage selon la présente invention, et de ce fait d'améliorer l'efficacité de repassage de l'appareil de repassage.

L'appareil de repassage peut en outre présenter une ou plusieurs des caractéristiques suivantes, prises seules ou en combinaison.

Selon un mode de réalisation de l'invention, le débit moyen de la pompe d'alimentation durant la première phase de régulation de débit est compris entre 100 et 130 g/mn, et avantageusement de l'ordre de 112 g/mn.

Selon un mode de réalisation de l'invention, le débit moyen de la pompe d'alimentation durant la première phase de régulation de débit correspond à environ 70% du débit maximal de la pompe d'alimentation.

Selon un mode de réalisation de l'invention, le programme de régulation de débit est configuré de telle sorte que, à chaque nouvelle phase de régulation de débit, le débit moyen de la pompe d'alimentation est réduit d'au moins 10% du débit maximal de la pompe d'alimentation. Par exemple, si le débit moyen de la pompe d'alimentation durant la première phase de régulation de débit correspond à environ 70% du débit maximal de la pompe d'alimentation, le débit moyen de la pompe d'alimentation durant la deuxième phase de régulation de débit correspondra à environ 60% du débit maximal de la pompe d'alimentation, et ainsi de suite jusqu'à la dernière phase de régulation de débit. Une telle réduction du débit moyen de la pompe d'alimentation peut être obtenue en faisant fonctionner la pompe d'alimentation par intermittence.

Selon un mode de réalisation de l'invention, la valeur du débit de consigne de chaque phase de régulation de débit est constante et définit un palier de débit respectif.

Selon un mode de réalisation de l'invention, le programme de régulation de débit comprend une série de N phases de régulation de débit qui sont successives et qui définissent une série de N paliers de débit successifs et décroissants, N étant un entier supérieur ou égal à 3. Selon un mode de réalisation de l'invention, N est égal à 7.

Selon un mode de réalisation de l'invention, la durée de la première phase de régulation de débit est plus élevée que la durée de chacune des autres phases de régulation de débit du programme de régulation de débit.

Selon un mode de réalisation de l'invention, la durée de la première phase de régulation de débit est de l'ordre de 2 à 3 secondes, et est préférentiellement de l'ordre de 2,5 secondes.

Selon un mode de réalisation de l'invention, la durée de chacune des phases de régulation de débit, à l'exception de la première phase de régulation de débit, est inférieure à 1 seconde, et est préférentiellement de l'ordre de 0,5 seconde.

Selon un mode de réalisation de l'invention, la dernière phase de régulation de débit du programme de régulation de débit dure sans interruption jusqu'à ce que l'alimentation en eau de la chambre de vaporisation soit interrompue, et en particulier jusqu'à ce que l'organe de commande de vapeur commande l'interruption de l'alimentation en eau de la chambre de vaporisation.

Selon un mode de réalisation de l'invention, le programme de régulation de débit est configuré de telle sorte que, pour une durée d'actionnement de l'organe de commande de vapeur inférieure ou égale à 200 ms, le programme de régulation de débit exécute uniquement la première phase de régulation de débit.

Selon un mode de réalisation de l'invention, le programme de régulation de débit est configuré de telle sorte que, pour une durée d'actionnement de l'organe de commande de vapeur supérieure ou égale à 6 s, le programme de régulation de débit exécute l'ensemble des phases de régulation de débit.

Selon un mode de réalisation de l'invention, l'appareil de repassage est configuré de telle sorte qu'un actionnement de l'organe de commande de vapeur provoque la mise en marche de la pompe d'alimentation et une alimentation en eau de la chambre de vaporisation, et de telle sorte qu'un relâchement de l'organe de commande de vapeur provoque l'arrêt de la pompe d'alimentation et une interruption de l'alimentation en eau de la chambre de vaporisation.

Selon un mode de réalisation de l'invention, l'organe de commande de vapeur est une gâchette de commande de vapeur. Avantageusement, un actionnement de la gâchette de commande de vapeur correspond à un maintien de la gâchette de commande de vapeur dans la position de commande de vapeur.

Selon un mode de réalisation de l'invention, lorsque l'alimentation en eau de la chambre de vaporisation est interrompue, le circuit de commande de débit décompte une durée d'interruption de l'alimentation en eau de la chambre de vaporisation et le débit moyen de la pompe d'alimentation, qui est défini par le circuit de commande de débit lors d'un nouvel actionnement de l'organe de commande de vapeur (c'est-à-dire lors du premier actionnement de l'organe de commande de vapeur ayant lieu juste après ladite interruption de l'alimentation en eau de la chambre de vaporisation), est alors fonction de la durée d'interruption de l'alimentation en eau de la chambre de vaporisation.

Selon un mode de réalisation de l'invention, le débit moyen de la pompe d'alimentation, qui est défini par le circuit de commande de débit lors d'un nouvel actionnement de l'organe de commande de vapeur, augmente en fonction de la durée d'interruption de l'alimentation en eau de la chambre de vaporisation.

Selon un mode de réalisation de l'invention, le circuit de commande de débit est configuré de telle sorte que, pour une durée d'interruption de l'alimentation en eau de la chambre de vaporisation inférieure ou égale à 1 s, le débit moyen de la pompe d'alimentation, qui est défini par le circuit de commande de débit lors d'un nouvel actionnement de l'organe de commande de vapeur, correspond au débit moyen de la pompe d'alimentation durant la phase de régulation de débit précédemment exécutée par le programme de régulation de débit. En d'autres termes, pour une durée d'interruption de l'alimentation en eau de la chambre de vaporisation inférieure ou égale à 1 s, le circuit de commande du débit pilote la pompe d'alimentation en recommençant la phase de régulation de débit précédemment exécutée par le programme de régulation de débit.

Selon un mode de réalisation de l'invention, le circuit de commande de débit est configuré de telle sorte que, pour une durée d'interruption de l'alimentation en eau de la chambre de vaporisation supérieure à 3 s, le débit moyen de la pompe d'alimentation, qui est défini par le circuit de commande de débit lors d'un nouvel actionnement de l'organe de commande de vapeur, correspond au débit moyen de la pompe d'alimentation durant la première phase de régulation de débit du programme de régulation de débit. En d'autres termes, pour une durée d'interruption de l'alimentation en eau de la chambre de vaporisation supérieure à 3 s, le circuit de commande du débit pilote la pompe d'alimentation à partir de la première phase de régulation de débit du programme de régulation de débit.

Selon un mode de réalisation de l'invention, le circuit de commande de débit est configuré de telle sorte que, pour une durée d'interruption de l'alimentation en eau de la chambre de vaporisation comprise entre 1 s et 3 s, le débit moyen de la pompe d'alimentation, qui est défini par le circuit de commande de débit lors d'un nouvel actionnement de l'organe de commande de vapeur, correspond au débit moyen de la pompe d'alimentation durant une phase de régulation de débit du programme de régulation de débit comprise entre la première phase de régulation de débit et la phase de régulation de débit précédemment exécutée par le programme de régulation de débit.

Selon un mode de réalisation de l'invention, le fer à repasser comporte en outre une résistance électrique chauffante configurée pour chauffer la chambre de vaporisation et un circuit de commande de chauffe configuré pour piloter l'alimentation électrique de la résistance électrique chauffante, l'organe de commande de vapeur étant relié au circuit de commande de chauffe et étant configuré pour commander la communication d'un signal d'actionnement au circuit de commande de chauffe lorsque l'organe de commande de vapeur est actionné, et dans lequel le circuit de commande de chauffe est configuré pour modifier l'alimentation électrique de la résistance électrique chauffante lorsqu'un signal d'actionnement est communiqué au circuit de commande de chauffe.

Une telle configuration de l'appareil de repassage permet notamment de commander l'alimentation électrique de la résistance électrique chauffante lors de l'actionnement de l'organe de commande de vapeur par un utilisateur. Ces dispositions permettent ainsi de limiter la baisse de la température de la chambre de vaporisation pendant une phase de demande de vapeur, et de ce fait d'assurer une vaporisation rapide d'une quantité importante d'eau injectée dans la chambre de vaporisation.

Ainsi, l'appareil de repassage permet d'obtenir une efficacité de repassage améliorée par rapport aux appareils de repassage de l'art antérieur, tout en limitant les risques de projection d'eau sur un linge à repasser.

Selon un mode de réalisation de l'invention, le fer à repasser comporte un capteur de température relié au circuit de commande de chauffe, le circuit de commande de chauffe étant configuré pour réguler l'alimentation électrique de la résistance électrique chauffante de manière à amener la température au niveau du capteur de température autour d'une température de consigne, et dans lequel, lorsque l'organe de commande de vapeur est actionné et commande l'alimentation en eau de la chambre de vaporisation, la valeur de la température de consigne est automatiquement augmentée par rapport à une valeur de consigne initiale. En d'autres termes, l'appareil de repassage est configuré de telle sorte que, lorsque l'organe de commande de vapeur est actionné et commande l'alimentation en eau de la chambre de vaporisation, le circuit de commande de chauffe augmente automatiquement la valeur de la température de consigne par rapport à la valeur de consigne initiale.

Selon un mode de réalisation de l'invention, le capteur de température est configuré pour déterminer la température de la chambre de vaporisation. Le capteur de température pourrait toutefois être configuré pour déterminer la température d'une semelle de repassage du fer à repasser.

Selon un mode de réalisation de l'invention, lorsque l'alimentation en eau de la chambre de vaporisation est interrompue, et notamment lorsque l'organe de commande de vapeur commande l'interruption de l'alimentation en eau de la chambre de vaporisation, la valeur de la température de consigne est automatiquement ramenée à la valeur de consigne initiale. En d'autres termes, l'appareil de repassage est configuré de telle sorte que, lorsque l'alimentation en eau de la chambre de vaporisation est interrompue, le circuit de commande de chauffe ramène automatiquement la valeur de la température de consigne à la valeur de consigne initiale. Ces dispositions permettent notamment d'éviter une surchauffe de la chambre de vaporisation et de la semelle de repassage du fer à repasser lorsque la production de vapeur n'est pas requise, et donc de limiter le risque de détérioration du linge en train d'être repassé du fait d'une température de semelle de repassage trop élevée.

Selon un mode de réalisation de l'invention, la valeur de consigne initiale correspond à une température de référence réglable par l'utilisateur. Ces dispositions permettent à un utilisateur de régler la température de consigne en dehors des phases de production de vapeur, par exemple en fonction du linge à repasser.

Selon un mode de réalisation de l'invention, le circuit de commande de débit est configuré pour piloter le fonctionnement de la pompe d'alimentation en fonction d'une position ou d'un état occupé par l'organe de commande de vapeur. Avantageusement, la pompe d'alimentation est configurée pour alimenter en eau la chambre de vaporisation lorsque l'organe de commande de vapeur est actionné.

Selon un mode de réalisation de l'invention, la pompe d'alimentation est une pompe d'alimentation électrique.

Selon un mode de réalisation de l'invention, l'appareil de repassage comporte un conduit d'acheminement reliant fluidiquement le réservoir d'eau à la chambre de vaporisation.

Selon un mode de réalisation de l'invention, le fer à repasser comporte une partie de préhension sur laquelle est monté l'organe de commande de vapeur. Selon un mode de réalisation de l'invention, l'organe de commande de vapeur est déplaçable entre une position de repos et une position de commande de vapeur, l'organe de commande de vapeur étant configuré pour être déplacé dans la position de commande de vapeur lorsqu'il est actionné par un utilisateur.

Selon un mode de réalisation de l'invention, le fer à repasser comporte un organe de sollicitation configuré pour solliciter l'organe de commande de vapeur vers la position de repos.

Selon un mode de réalisation de l'invention, l'organe de commande de vapeur est monté pivotant entre la position de repos et la position commande de vapeur.

Selon un mode de réalisation de l'invention, l'organe de commande de vapeur comporte une partie de manipulation faisant saillie de la partie de préhension, et par exemple située sous la partie de préhension.

Selon un mode de réalisation de l'invention, l'organe de commande de vapeur est configuré pour commander la communication d'un signal de désactivation au circuit de commande de débit lorsque l'organe de commande de vapeur est relâché, et le circuit de commande de débit est configuré pour arrêter la pompe d'alimentation lorsqu'un signal de désactivation est communiqué au circuit de commande de débit.

Selon un mode de réalisation de l'invention, le circuit de commande de chauffe et le circuit de commande de débit sont intégrés dans un microprocesseur.

Selon un mode de réalisation de l'invention, l'appareil de repassage comporte en outre une base sur laquelle le fer à repasser est disposé lors des phases inactives de repassage.

Selon un mode de réalisation de l'invention, la pompe d'alimentation est intégrée dans la base.

Selon un mode de réalisation de l'invention, le réservoir d'eau est intégré dans la base.

Selon un mode de réalisation de l'invention, le fer à repasser comporte une semelle de repassage qui est liée thermiquement à la chambre de vaporisation et qui est munie d'au moins un orifice de sortie de vapeur relié fluidiquement à la chambre de vaporisation.

Selon un mode de réalisation de l'invention, le fer à repasser comporte un corps chauffant liée thermiquement à la semelle de repassage et comprenant la chambre de vaporisation. De façon avantageuse, le corps chauffant comporte une fonderie délimitant au moins en partie la chambre de vaporisation. Avantageusement, la résistance électrique chauffante est intégrée dans la fonderie.

Selon un mode de réalisation de l'invention, le corps chauffant comporte une plaque de fermeture qui repose sur la fonderie, la chambre de vaporisation étant délimitée par la fonderie et la plaque de fermeture.

### Brève description des figures

De toute façon l'invention sera bien comprise à l'aide de la description qui suit en référence aux dessins schématiques annexés représentant, à titre d'exemple non limitatif, une forme d'exécution de cet appareil de repassage.
Figure 1 est une vue de côté d'un appareil de repassage selon l'invention.
Figure 2 est une vue en perspective de dessous d'un fer à repasser appartenant à l'appareil de repassage de la figure 1.
Figure 3 est une vue partielle éclatée et en perspective du fer à repasser de la figure 2.
Figure 4 est une vue schématique de l'appareil de repassage de la figure 1.
Figure 5 est un diagramme représentant un exemple d'évolution temporelle d'un programme de régulation de débit de l'appareil de repassage en fonction des durées d'actionnement et de relâchement d'un organe de commande de vapeur de l'appareil de repassage.

### Description détaillée

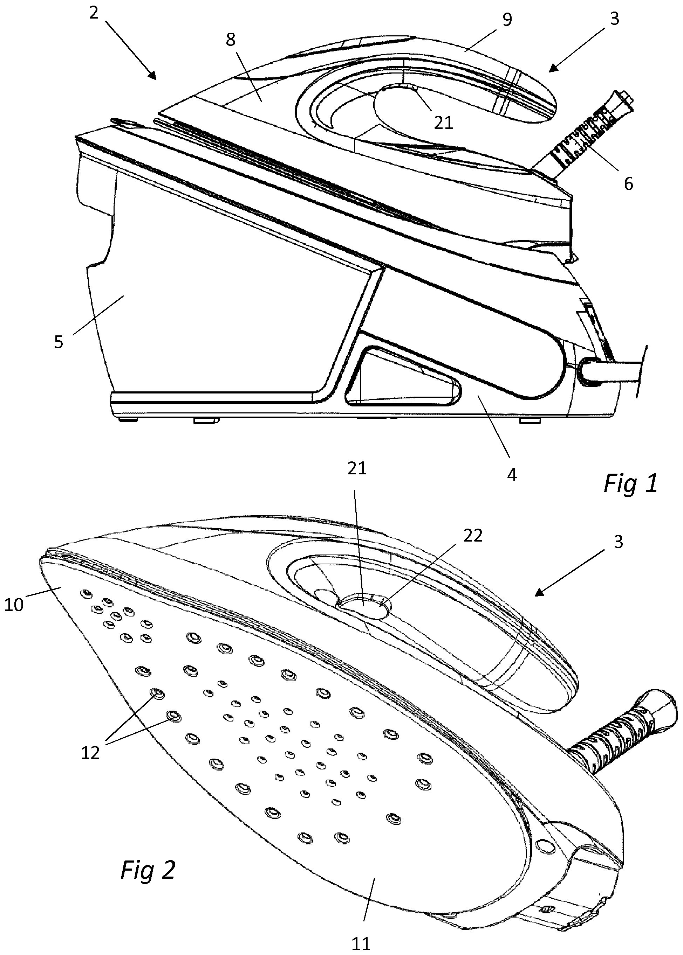

Les figures 1 à 4 représentent un appareil de repassage 2 qui comporte un fer à repasser 3 et une base 4 sur laquelle le fer à repasser 3 peut être disposé lors des phases inactives de repassage.

L'appareil de repassage 2 comporte en outre un réservoir d'eau 5 intégré dans la base 4 et pouvant par exemple être amovible, et un circuit d'alimentation en eau relié fluidiquement au réservoir d'eau 5. Le circuit d'alimentation en eau comporte notamment un conduit d'acheminement d'eau 6 reliant fluidiquement le réservoir d'eau 5 au fer à repasser 3, et une pompe d'alimentation 7 intégrée dans la base 4 et configurée pour alimenter le fer à repasser 3 en eau provenant du réservoir d'eau 5. La pompe d'alimentation 7 est avantageusement une pompe d'alimentation électrique.

Comme montré sur les figures 1 et 2, le fer à repasser 3 comporte un boîtier 8 comportant une partie de préhension 9 à son extrémité supérieure, et une semelle de repassage 10 munie d'une surface de repassage 11 sensiblement plane et d'une pluralité d'orifices de sortie de vapeur 12 débouchant dans la surface de repassage 11.

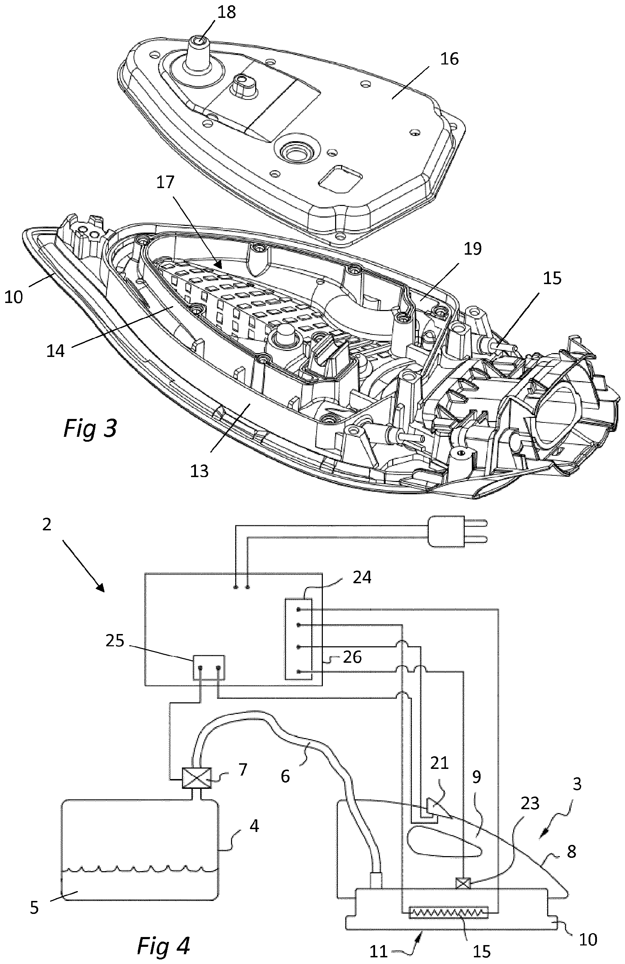

Comme montré plus particulièrement sur la figure 3, le fer à repasser 3 comporte également un corps chauffant 13 intégré dans la partie basse du boitier 8, et lié thermiquement et mécaniquement à la semelle de repassage 10. Le corps chauffant 13 comporte une fonderie 14, par exemple en aluminium, et une résistance électrique chauffante 15 cintrée en U et intégrée dans la fonderie 14.

Le corps chauffant 13 comporte également une plaque de fermeture 16 (visible sur la figure 3) qui repose sur la fonderie 14, et une chambre de vaporisation 17, de type à vaporisation instantanée, destinée à être chauffée par la résistance électrique chauffante 15. La chambre de vaporisation 17 est avantageusement délimitée par la fonderie 14 et la plaque de fermeture 16.

Le corps chauffant 13 comporte en outre une ouverture d'injection de liquide 18 reliée fluidiquement à la pompe d'alimentation 7 et débouchant dans une partie avant de la chambre de vaporisation 17. La pompe d'alimentation 7 est ainsi configurée pour alimenter la chambre de vaporisation 17 en eau provenant du réservoir d'eau 5.

L'appareil de repassage 2 comprend en outre un circuit de distribution de vapeur 19 défini par la fonderie 14 et la plaque de fermeture 16, et reliant fluidiquement la chambre de vaporisation 17 aux orifices de sortie de vapeur 12, et ce de telle sorte que la vapeur générée dans la chambre de vaporisation 17 puisse s'écouler jusqu'aux orifices de sortie de vapeur 12.

L'appareil de repassage 2 comprend également un organe de commande de vapeur 21 porté par le fer à repasser 3 et destiné à être actionné manuellement par un utilisateur. Selon le mode de réalisation représenté sur les figures, l'organe de commande de vapeur 21 se présente sous la forme d'une gâchette de commande de vapeur.

L'organe de commande de vapeur 21 est plus particulièrement monté sur la partie de préhension 9 du fer à repasser 3. Avantageusement, l'organe de commande de vapeur 21 comporte une partie de manipulation 22 faisant saillie de la partie de préhension 9, et par exemple située sous la partie de préhension.

L'organe de commande de vapeur 21 est déplaçable entre une position de repos et une position de commande de vapeur, et est configuré pour être déplacé dans la position de commande de vapeur lorsqu'il est actionné par un utilisateur. De façon avantageuse, le fer à repasser 3 comporte un organe de sollicitation (non représenté sur les figures) configuré pour solliciter l'organe de commande de vapeur 21 vers la position de repos. L'organe de commande de vapeur 21 peut par exemple comporter une partie de montage montée pivotante autour d'un axe de pivotement porté par le boîtier 8 de telle sorte que l'organe de commande de vapeur 21 soit monté pivotant entre la position de repos et la position de commande de vapeur.

L'organe de commande de vapeur 21 est plus particulièrement configuré pour commander la mise en marche de la pompe d'alimentation 7 et donc une alimentation en eau de la chambre de vaporisation 17 lorsque l'organe de commande de vapeur 21 est actionné par un utilisateur, et pour commander l'arrêt de la pompe d'alimentation 7 et donc une interruption de l'alimentation en eau de la chambre de vaporisation 17 lorsque l'organe de commande de vapeur 21 est relâché par l'utilisateur.

L'appareil de repassage 2 comprend également un capteur de température 23 configuré pour déterminer la température de la chambre de vaporisation 17 ou de la semelle de repassage 9, et un circuit de commande de chauffe 24 relié au capteur de température 23 et configuré pour réguler l'alimentation électrique de la résistance électrique chauffante 15 de manière à amener la température au niveau du capteur de température 23 autour d'une température de consigne.

L'organe de commande de vapeur 21 est avantageusement relié au circuit de commande de chauffe 24 et est configuré pour commander la communication d'un signal d'actionnement au circuit de commande de chauffe 24 lorsque l'organe de commande de vapeur 21 est actionné par un utilisateur.

Le circuit de commande de chauffe 24 est notamment configuré pour modifier l'alimentation électrique de la résistance électrique chauffante 15 lorsqu'un signal d'actionnement est communiqué au circuit de commande de chauffe 24. De façon avantageuse, lorsque l'organe de commande de vapeur 21 est actionné et commande l'alimentation en eau de la chambre de vaporisation 17, le circuit de commande de chauffe 24 augmente automatiquement la valeur de la température de consigne par rapport à une valeur de consigne initiale, qui peut correspondre avantageusement à une température de référence réglable par l'utilisateur. En outre, lorsque l'organe de commande de vapeur 21 est relâché et commande l'interruption de l'alimentation en eau de la chambre de vaporisation 17, le circuit de commande de chauffe ramène automatiquement la valeur de la température de consigne à la valeur de consigne initiale.

L'appareil de repassage 2 comprend également un circuit de commande de débit 25 relié à l'organe de commande de vapeur 21 et configuré pour piloter le fonctionnement de la pompe d'alimentation 7 en fonction de la position occupée par l'organe de commande de vapeur 21. En particulier, l'organe de commande de vapeur 21 est configuré pour commander la communication d'un signal d'activation au circuit de commande de débit 25 lorsque l'organe de commande de vapeur 21 est actionné par un utilisateur, et pour commander la communication d'un signal de désactivation au circuit de commande de débit 25 lorsque l'organe de commande de vapeur 21 est relâché par l'utilisateur, et le circuit de commande de débit 25 est configuré pour mettre en marche la pompe d'alimentation 7 lorsqu'un signal d'activation est communiqué au circuit de commande de débit 25 et pour arrêter la pompe d'alimentation 7 lorsqu'un signal de désactivation est communiqué au circuit de commande de débit 25.

Selon un mode de réalisation de l'invention, lorsque l'organe de commande de vapeur 21 est actionné et commande l'alimentation en eau de la chambre de vaporisation 17, le circuit de commande de débit 25 pilote la pompe d'alimentation 7 selon un programme de régulation de débit comprenant une série de N phases de régulation de débit qui se succèdent et qui définissent une série de N paliers de débit qui se succèdent, N étant un entier supérieur ou égal à 3, et par exemple égal à 7.

Durant chaque phase de régulation de débit du programme de régulation de débit, le débit moyen de la pompe d'alimentation 7 est maintenu à un palier de débit correspondant Px pendant une durée prédéterminée correspondante tx, et ce pour chaque valeur de X comprise entre 1 et N.

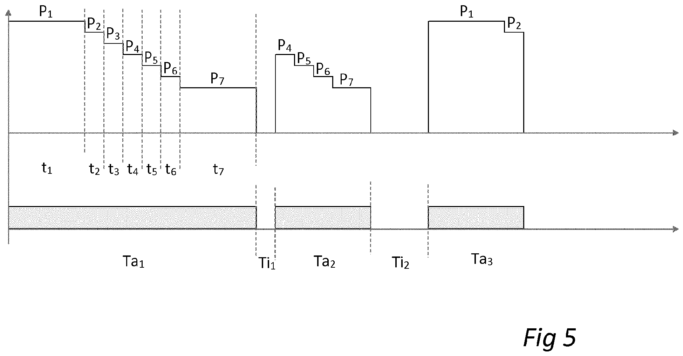

Comme cela est plus particulièrement visible sur la figure 5, la série de N phases de régulation de débit définit une série de N paliers de débit (de P₁ à P₇) définie de telle sorte que le palier de débit P_{X+1} est inférieur au palier de débit Px, pour chaque valeur de X comprise entre 1 et N-1. Ainsi, au cours des différentes phases de régulation de débit successives du programme de régulation de débit, le débit moyen de la pompe d'alimentation 7 est régulé autour d'un débit de consigne respectif, les valeurs des débits de consigne allant en diminuant d'une phase de régulation de débit à une phase de régulation de débit suivante. En d'autres termes, le programme de régulation de débit est configuré pour diminuer progressivement le débit moyen de la pompe d'alimentation 7 lorsque l'organe de commande de vapeur 21 est actionné en continu pendant une durée d'actionnement Ta supérieure à la somme des durées prédéterminées de différentes phases de régulation de débit successives.

Par exemple, si la durée d'actionnement Ta de l'organe de commande de vapeur 21 est supérieure à la somme des durées prédéterminées t₁ à t₆, alors le débit moyen de la pompe d'alimentation 7 décroit successivement des paliers de débit P₁ à P₆ et jusqu'à atteindre le palier de débit P₇. Cependant, si la durée d'actionnement Ta de l'organe de commande de vapeur 21 est supérieure à la durée prédéterminée t₁ mais est inférieure ou égale à la somme des durées prédéterminées t₁ et t₂, alors le débit moyen de la pompe d'alimentation 7 décroit uniquement du palier de débit P₁ au palier de débit P₂.

Selon un mode de réalisation de l'invention, le débit moyen de la pompe d'alimentation 7 durant la première phase de régulation de débit correspond à environ 70% du débit maximal de la pompe d'alimentation. Le débit moyen de la pompe d'alimentation 7 durant la première phase de régulation de débit peut exemple être compris entre 100 et 130 g/mn, et est avantageusement de l'ordre de 112 g/mn.

De façon avantageuse, le programme de régulation de débit est configuré de telle sorte que, à chaque nouvelle phase de régulation de débit du programme de régulation de débit, le débit moyen de la pompe d'alimentation 7 est réduit de 10% du débit maximal de la pompe d'alimentation 7. Par exemple, le débit moyen de la pompe d'alimentation 7 durant la deuxième phase de régulation de débit correspond à environ 60% du débit maximal de la pompe d'alimentation, le débit moyen de la pompe d'alimentation 7 durant la troisième phase de régulation de débit correspond à environ 50% du débit maximal de la pompe d'alimentation, et ainsi de suite jusqu'à la dernière phase de régulation de débit de la série de N phases de régulation de débit. Avantageusement, la durée prédéterminée t₁ de la première phase de régulation de débit, et donc du premier palier de débit P₁, est plus élevée que la durée prédéterminée de chacune des autres phases de régulation de débit, et donc de chacun des paliers de débit P₂ à P_{N-1}, et est avantageusement de l'ordre de 2 à 3 secondes, et préférentiellement de l'ordre de 2,5 secondes. La durée prédéterminée de chacune des phases de régulation de débit, à l'exception de la première phase de régulation de débit, et donc des paliers de débit P₂ à P_{N-1}, est inférieure à 1 seconde, et est préférentiellement de l'ordre de 0,5 seconde. Selon un mode de réalisation de l'invention, la dernière phase de régulation de débit, et donc le palier de débit P_{N}, dure sans interruption jusqu'à ce que l'organe de commande de vapeur 21 commande l'interruption de l'alimentation en eau de la chambre de vaporisation 17.

Avantageusement, le programme de régulation de débit est configuré de telle sorte que, pour une durée d'actionnement Ta de l'organe de commande de vapeur 21 inférieure ou égale à 200 ms, le programme de régulation de débit exécute uniquement la première phase de régulation de débit, et pour une durée d'actionnement Ta de l'organe de commande de vapeur 21 supérieure ou égale à 6 s, le programme de régulation de débit exécute l'ensembles des phases de régulation de débit de la série de N phases de régulation de débit.

Selon un mode de réalisation de l'invention, lorsque l'organe de commande de vapeur 21 commande l'interruption de l'alimentation en eau de la chambre de vaporisation 17, c'est-à-dire lorsque l'organe de commande de vapeur 21 est relâché, le circuit de commande de débit 25 décompte une durée d'interruption Ti de l'alimentation en eau de la chambre de vaporisation 17, et le débit moyen de la pompe d'alimentation 7, qui est défini par le circuit de commande de débit 25 lors d'un nouvel actionnement de l'organe de commande de vapeur 21, est alors fonction de la durée d'interruption Ti de l'alimentation en eau de la chambre de vaporisation 17, et préférentiellement augmente en fonction de la durée d'interruption Ti de l'alimentation en eau de la chambre de vaporisation 17.

Plus précisément, le circuit de commande de débit 25 peut par exemple être configuré de telle sorte que, pour une durée d'interruption Ti de l'alimentation en eau de la chambre de vaporisation 17 inférieure ou égale à 1 s, le débit moyen de la pompe d'alimentation 7, qui est défini par le circuit de commande de débit 25 lors d'un nouvel actionnement de l'organe de commande de vapeur 21, correspond au débit moyen de la pompe d'alimentation 7 durant la phase de régulation de débit précédemment exécutée par le programme de régulation de débit, et de telle sorte que, pour une durée d'interruption Ti de l'alimentation en eau de la chambre de vaporisation 17 supérieure à 3 s, le débit moyen de la pompe d'alimentation 7, qui est défini par le circuit de commande de débit 25 lors d'un nouvel actionnement de l'organe de commande de vapeur 21, correspond au débit moyen de la pompe d'alimentation 7 durant la première phase de régulation de débit du programme de régulation de débit.

En outre, le circuit de commande de débit 25 peut être configuré de telle sorte que, pour une durée d'interruption Ti de l'alimentation en eau de la chambre de vaporisation 17 comprise entre 1 s et 3 s, le débit moyen de la pompe d'alimentation 7, qui est défini par le circuit de commande de débit 25 lors d'un nouvel actionnement de l'organe de commande de vapeur 21, correspond au débit moyen de la pompe d'alimentation 7 durant une phase de régulation de débit du programme de régulation de débit comprise entre la première phase de régulation de débit et la phase de régulation de débit précédemment exécutée par le programme de régulation de débit. Par exemple, comme montré sur la figure 5, en fonction de la durée d'interruption Ti de l'alimentation en eau de la chambre de vaporisation 17, le débit moyen de la pompe d'alimentation 7, qui est défini par le circuit de commande de débit 25 lors d'un nouvel actionnement de l'organe de commande de vapeur 21, peut correspondre au débit moyen de la pompe d'alimentation 7 durant la quatrième phase de régulation de débit, c'est-à-dire au palier de débit P₄. Il doit être noté que les durées d'interruption Ti et les durées d'actionnement Ta sont suivies, sur la figure 5, de chiffres en indice afin de pouvoir différencier lesdites durées les unes des autres.

Il convient de noter que, lors d'un nouvel actionnement de l'organe de commande de vapeur 21 après une durée d'interruption Ti, le circuit de commande de débit 25 poursuit le programme de régulation de débit à partir de la phase de régulation de débit correspondant au débit moyen défini par le circuit de commande de débit lors de ce nouvel actionnement de l'organe de commande de vapeur 21.

L'appareil de repassage 2 comprend de plus une carte électronique de commande qui est par exemple intégrée dans le fer à repasser 3 et qui est équipée d'un microprocesseur 26 dans lequel sont intégrés le circuit de commande de chauffe 24 et le circuit de commande de débit 25.

Selon un mode de réalisation de l'invention, l'appareil de repassage 2 pourrait également comporter un interrupteur (non représenté sur les figures), tel qu'un microrupteur, porté par le fer à repasser 3 et configuré pour commander la communication d'un signal d'actionnement au circuit de commande de chauffe 24, la communication d'un signal d'activation au circuit de commande de débit 25 et la communication d'un signal de désactivation au circuit de commande de débit 25 en fonction de la position de l'organe de commande de vapeur 21.

Selon un mode de réalisation de l'invention non représenté sur les figures, l'organe de commande de vapeur 21 pourrait prendre la forme d'un bouton de commande de vapeur porté par le fer à repasser 3.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de repassage (2) comprenant un réservoir d'eau (5), un fer à repasser (3) comportant une chambre de vaporisation (17) pour la production de vapeur, une pompe d'alimentation (7) reliée fluidiquement au réservoir d'eau (5) et configurée pour alimenter en eau la chambre de vaporisation (17), un organe de commande de vapeur (21) destiné à être actionné manuellement par un utilisateur et configuré pour commander une alimentation en eau de la chambre de vaporisation (17) lorsque l'organe de commande de vapeur (21) est actionné, et un circuit de commande de débit (25) relié à l'organe de commande de vapeur (21) et configuré pour piloter le fonctionnement de la pompe d'alimentation (7), dans lequel l'organe de commande de vapeur (21) est configuré pour commander la communication d'un signal d'activation au circuit de commande de débit (25) lorsque l'organe de commande de vapeur (21) est actionné, et dans lequel le circuit de commande de débit (25) est configuré pour piloter la pompe d'alimentation (7) selon un programme de régulation de débit lorsqu'un signal d'activation est communiqué au circuit de commande de débit (25), **caractérisé en ce que** le programme de régulation de débit comporte une série d'au moins trois phases de régulation de débit qui sont successives, le débit moyen de la pompe d'alimentation (7) étant régulé, durant chaque phase de régulation de débit, autour d'un débit de consigne respectif, les valeurs des débits de consigne diminuant d'une phase de régulation de débit à une phase de régulation de débit suivante.

2. Appareil de repassage (2) selon la revendication 1, dans lequel le programme de régulation de débit est configuré de telle sorte que, à chaque nouvelle phase de régulation de débit, le débit moyen de la pompe d'alimentation est réduit d'au moins 10% du débit maximal de la pompe d'alimentation (7).

3. Appareil de repassage (2) selon la revendication 1 ou 2, dans lequel le programme de régulation de débit comprend une série de N phases de régulation de débit qui sont successives et qui définissent une série de N paliers de débit successifs et décroissants, N étant un entier supérieur ou égal à 3.

4. Appareil de repassage (2) selon l'une quelconque des revendications 1 à 3, dans lequel la durée de la première phase de régulation de débit du programme de régulation de débit est plus élevée que la durée de chacune des autres phases de régulation de débit du programme de régulation de débit.

5. Appareil de repassage (2) selon l'une quelconque des revendications 1 à 4, dans lequel la durée de la première phase de régulation de débit est de l'ordre de 2 à 3 secondes.

6. Appareil de repassage (2) selon l'une quelconque des revendications 1 à 5, dans lequel la durée de chacune des phases de régulation de débit, à l'exception de la première phase de régulation de débit, est inférieure à 1 seconde.

7. Appareil de repassage (2) selon l'une quelconque des revendications 1 à 6, dans lequel la dernière phase de régulation de débit du programme de régulation de débit dure sans interruption jusqu'à ce que l'alimentation en eau de la chambre de vaporisation soit interrompue.

8. Appareil de repassage (2) selon l'une quelconque des revendications 1 à 7, lequel est configuré de telle sorte qu'un actionnement de l'organe de commande de vapeur (21) provoque la mise en marche de la pompe d'alimentation (7) et une alimentation en eau de la chambre de vaporisation (17), et de telle sorte qu'un relâchement de l'organe de commande de vapeur (21) provoque l'arrêt de la pompe d'alimentation (7) et une interruption de l'alimentation en eau de la chambre de vaporisation (17).

9. Appareil de repassage (2) selon l'une quelconque des revendications 1 à 8, dans lequel l'organe de commande de vapeur (21) est une gâchette de commande de vapeur.

10. Appareil de repassage (2) selon l'une quelconque des revendications 1 à 9, dans lequel, lorsque l'alimentation en eau de la chambre de vaporisation (17) est interrompue, le circuit de commande de débit (25) décompte une durée d'interruption (Ti) de l'alimentation en eau de la chambre de vaporisation (17), et le débit moyen de la pompe d'alimentation (7), qui est défini par le circuit de commande de débit (25) lors d'un nouvel actionnement de l'organe de commande de vapeur (21), est alors fonction de la durée d'interruption (Ti) de l'alimentation en eau de la chambre de vaporisation (17).

11. Appareil de repassage (2) selon l'une quelconque des revendications 1 à 10, dans lequel le fer à repasser (3) comporte en outre une résistance électrique chauffante (15) configurée pour chauffer la chambre de vaporisation (17) et un circuit de commande de chauffe (24) configuré pour piloter l'alimentation électrique de la résistance électrique chauffante (15), l'organe de commande de vapeur (21) étant relié au circuit de commande de chauffe (24) et étant configuré pour commander la communication d'un signal d'actionnement au circuit de commande de chauffe (24) lorsque l'organe de commande de vapeur (21) est actionné, et dans lequel le circuit de commande de chauffe (24) est configuré pour modifier l'alimentation électrique de la résistance électrique chauffante (15) lorsqu'un signal d'actionnement est communiqué au circuit de commande de chauffe (24).

12. Appareil de repassage (2) selon la revendication 11, dans lequel le fer à repasser (3) comporte un capteur de température (23) relié au circuit de commande de chauffe (24), le circuit de commande de chauffe (24) étant configuré pour réguler l'alimentation électrique de la résistance électrique chauffante (15) de manière à amener la température au niveau du capteur de température (23) autour d'une température de consigne, et dans lequel, lorsque l'organe de commande de vapeur (21) est actionné et commande l'alimentation en eau de la chambre de vaporisation (17), la valeur de la température de consigne est automatiquement augmentée par rapport à une valeur de consigne initiale.

13. Appareil de repassage (2) selon la revendication 12, dans lequel le capteur de température (23) est configuré pour déterminer la température de la chambre de vaporisation (17).

14. Appareil de repassage (2) selon la revendication 12 ou 13, dans lequel, lorsque l'alimentation en eau de la chambre de vaporisation (17) est interrompue, la valeur de la température de consigne est automatiquement ramenée à la valeur de consigne initiale.

15. Appareil de repassage (2) selon l'une quelconque des revendications 12 à 14, dans lequel la valeur de consigne initiale correspond à une température de référence réglable par l'utilisateur.

16. Appareil de repassage (2) selon l'une quelconque des revendications 11 à 15, dans lequel le circuit de commande de chauffe (24) et le circuit de commande de débit (25) sont intégrés dans un microprocesseur (26).

17. Appareil de repassage (2) selon l'une quelconque des revendications 1 à 16, lequel comporte en outre une base (4) sur laquelle le fer à repasser (3) est disposé lors des phases inactives de repassage.

18. Appareil de repassage (2) selon l'une quelconque des revendications 1 à 17, dans lequel le fer à repasser (3) comporte une semelle de repassage (10) qui est liée thermiquement à la chambre de vaporisation (17) et qui est munie d'au moins un orifice de sortie de vapeur (12) relié fluidiquement à la chambre de vaporisation (17).

## Patentansprüche

1. Bügeleinrichtung (2), umfassend einen Wasserbehälter (5), ein Bügeleisen (3), das eine Verdampfungskammer (17) für die Erzeugung von Dampf umfasst, eine Versorgungspumpe (7), die mit dem Wasserbehälter (5) fluidisch verbunden ist und konfiguriert ist, um die Verdampfungskammer (17) mit Wasser zu versorgen, ein Dampfsteuerorgan (21), das dazu vorgesehen ist, durch einen Benutzer manuell betätigt zu werden, und konfiguriert ist, um eine Wasserversorgung der Verdampfungskammer (17) zu steuern, wenn das Dampfsteuerorgan (21) betätigt wird, und einen Durchsatzsteuerkreis (25), der mit dem Dampfsteuerorgan (21) verbunden ist und konfiguriert ist, um den Betrieb der Versorgungspumpe (7) zu führen, wobei das Dampfsteuerorgan (21) konfiguriert ist, um die Kommunikation eines Aktivierungssignals an den Durchsatzsteuerkreis (25) zu steuern, wenn das Dampfsteuerorgan (21) betätigt wird, und wobei der Durchsatzsteuerkreis (25) konfiguriert ist, um die Versorgungspumpe (7) gemäß einem Durchsatzregulierungsprogramm zu führen, wenn ein Aktivierungssignal an den Durchsatzsteuerkreis (25) kommuniziert wird, **dadurch gekennzeichnet, dass** das Durchsatzregulierungsprogramm eine Reihe von mindestens drei Durchsatzregulierungsphasen umfasst, die aufeinanderfolgen, wobei der durchschnittliche Durchsatz der Versorgungspumpe (7) während jeder Durchsatzregulierungsphase um einen jeweiligen Solldurchsatz herum reguliert wird, wobei sich die Solldurchsatzwerte von einer Durchsatzregulierungsphase zu einer folgenden Durchsatzregulierungsphase verringern.

2. Bügeleinrichtung (2) nach Anspruch 1, wobei das Durchsatzregulierungsprogramm derart konfiguriert ist, dass bei jeder neuen Durchsatzregulierungsphase der durchschnittliche Durchsatz der Versorgungspumpe um mindestens 10% des maximalen Durchsatzes der Versorgungspumpe (7) reduziert wird.

3. Bügeleinrichtung (2) nach Anspruch 1 oder 2, wobei das Durchsatzregulierungsprogramm eine Reihe von N Durchsatzregulierungsphasen umfasst, die aufeinanderfolgen und die eine Reihe von N aufeinanderfolgenden und abnehmenden Durchsatzstufen definieren, wobei N eine ganze Zahl größer oder gleich 3 ist.

4. Bügeleinrichtung (2) nach einem der Ansprüche 1 bis 3, wobei die Dauer der ersten Durchsatzregulierungsphase des Durchsatzregulierungsprogramms länger ist als die Dauer jeder der anderen Durchsatzregulierungsphasen des Durchsatzregulierungsprogramms

5. Bügeleinrichtung (2) nach einem der Ansprüche 1 bis 4, wobei die Dauer der ersten Durchsatzregulierungsphase in der Größenordnung von 2 bis 3 Sekunden ist.

6. Bügeleinrichtung (2) nach einem der Ansprüche 1 bis 5, wobei die Dauer jeder der Durchsatzregulierungsphasen, mit Ausnahme der ersten Durchsatzregulierungsphase, kürzer als 1 Sekunde ist.

7. Bügeleinrichtung (2) nach einem der Ansprüche 1 bis 6, wobei die letzte Durchsatzregulierungsphase des Durchsatzregulierungsprogramms ohne Unterbrechung andauert, bis die Wasserversorgung der Verdampfungskammer unterbrochen wird.

8. Bügeleinrichtung (2) nach einem der Ansprüche 1 bis 7, die derart konfiguriert ist, dass eine Betätigung des Dampfsteuerorgans (21) das Starten der Versorgungspumpe (7) und eine Wasserversorgung der Verdampfungskammer (17) bewirkt, und derart, dass ein Loslassen des Dampfsteuerorgans (21) das Stoppen der Versorgungspumpe (7) und eine Unterbrechung der Wasserversorgung der Verdampfungskammer (17) bewirkt.

9. Bügeleinrichtung (2) nach einem der Ansprüche 1 bis 8, wobei das Dampfsteuerorgan (21) ein Dampfsteuerauslöser ist.

10. Bügeleinrichtung (2) nach einem der Ansprüche 1 bis 9, wobei, wenn die Wasserversorgung der Verdampfungskammer (17) unterbrochen wird, der Durchsatzsteuerkreis (25) eine Unterbrechungsdauer (Ti) der Wasserversorgung der Verdampfungskammer (17) zählt, und der durchschnittliche Durchsatz der Versorgungspumpe (7), der durch den Durchsatzsteuerkreis (25) bei einer neuen Betätigung des Durchsatzsteuerorgans (21) definiert wird, dann von der Unterbrechungsdauer (Ti) der Wasserversorgung der Verdampfungskammer (17) abhängt.

11. Bügeleinrichtung (2) nach einem der Ansprüche 1 bis 10, wobei das Bügeleisen (3) weiter einen elektrischen Heizwiderstand (15) umfasst, der konfiguriert ist, um die Verdampfungskammer (17) aufzuheizen, und einen Heizsteuerkreis (24), der konfiguriert ist, um die elektrische Versorgung des elektrischen Heizwiderstands (15) zu führen, wobei das Dampfsteuerorgan (21) mit dem Heizsteuerkreis (24) verbunden ist und konfiguriert ist, um die Kommunikation eines Betätigungssignals an den Heizsteuerkreis (24) zu steuern, wenn das Dampfsteuerorgan (21) betätigt wird, und wobei der Heizsteuerkreis (24) konfiguriert ist, um die elektrische Versorgung des elektrischen Heizwiderstands (15) zu modifizieren, wenn ein Betätigungssignal an den Heizsteuerkreis (24) kommuniziert wird.

12. Bügeleinrichtung (2) nach Anspruch 11, wobei das Bügeleisen (3) einen Temperatursensor (23) umfasst, der mit dem Heizsteuerkreis (24) verbunden ist, wobei der Heizsteuerkreis (24) konfiguriert ist, um die elektrische Versorgung des elektrischen Heizwiderstands (15) so zu regulieren, dass die Temperatur am Temperatursensor (23) um eine Solltemperatur herum gebracht wird, und wobei, wenn das Dampfsteuerorgan (21) betätigt wird und die Wasserversorgung der Verdampfungskammer (17) steuert, der Wert der Solltemperatur in Bezug auf einen anfänglichen Sollwert automatisch erhöht wird.

13. Bügeleinrichtung (2) nach Anspruch 12, wobei der Temperatursensor (23) konfiguriert ist, um die Temperatur der Verdampfungskammer (17) zu bestimmen.

14. Bügeleinrichtung (2) nach Anspruch 12 oder 13, wobei, wenn die Wasserversorgung der Verdampfungskammer (17) unterbrochen wird, der Wert der Solltemperatur automatisch auf den anfänglichen Sollwert gebracht wird.

15. Bügeleinrichtung (2) nach einem der Ansprüche 12 bis 14, wobei der anfängliche Sollwert einer durch den Benutzer regulierbaren Referenztemperatur entspricht.

16. Bügeleinrichtung (2) nach einem der Ansprüche 11 bis 15, wobei der Heizsteuerkreis (24) und der Durchsatzsteuerkreis (25) in einem Mikroprozessor (26) integriert sind.

17. Bügeleinrichtung (2) nach einem der Ansprüche 1 bis 16, die weiter eine Basis (4) umfasst, auf der das Bügeleisen (3) bei den inaktiven Bügelphasen gestellt wird.

18. Bügeleinrichtung (2) nach einem der Ansprüche 1 bis 17, wobei das Bügeleisen (3) eine Bügelsohle (10) umfasst, die mit der Verdampfungskammer (17) thermisch verbunden ist und die mit mindestens einer Dampfaustrittsöffnung (12) ausgestattet ist, die mit der Verdampfungskammer (17) fluidisch verbunden ist.

## Claims

1. Ironing appliance (2) comprising a water tank (5), an iron (3) having a steam generating chamber (17) for producing steam, a feed pump (7) fluidly connected to the water tank (5) and configured to supply water to the steam generating chamber (17), a steam control member (21) to be manually operated by a user and configured to control a water supply to the steam generating chamber (17) when the steam control member (21) is actuated, and a flow control circuit (25) connected to the steam control member (21) and configured to control the operation of the feed pump (7), wherein the steam control member (21) is configured to control the communication of an activation signal to the flow control circuit (25) when the steam control member (21) is actuated, and wherein the flow control circuit (25) is configured to control the operation of the feed pump (7) according to a flow control programme when an activation signal is communicated to the flow control circuit (25), **characterised in that** the flow control programme has a series of at least three successive flow control phases, the average flow rate of the feed pump (7) being regulated, during each flow control phase, around a respective setpoint flow rate, the values of the setpoint flow rates decreasing from a flow control phase to a next flow control phase.

2. Ironing appliance (2) according to claim 1, wherein the flow control programme is configured such that, at each new flow control phase, the average flow rate of the feed pump is reduced by at least 10% of the maximum flow rate of the feed pump (7).

3. Ironing appliance (2) according to claim 1 or 2, wherein the flow control programme comprises a series of N successive flow control phases which define a series of N successive and decreasing flow rate stages, N being an integer greater than or equal to 3.

4. Ironing appliance (2) according to any one of claims 1 to 3, wherein the duration of the first flow control phase of the flow control programme is greater than the duration of each of the other flow control phases of the flow control programme.

5. Ironing appliance (2) according to any one of claims 1 to 4, wherein the duration of the first flow control phase is in the range of 2 to 3 seconds.

6. Ironing appliance (2) according to any one of claims 1 to 5, wherein the duration of each of the flow control phases, except for the first flow control phase, is less than 1 second.

7. Ironing appliance (2) according to any one of claims 1 to 6, wherein the last flow control phase of the flow control programme continues until the water supply to the steam generating chamber is interrupted.

8. Ironing appliance (2) according to any one of claims 1 to 7, which is configured such that the actuation of the steam control member (21) causes the feed pump (7) to start and to supply water to the steam generating chamber (17), and such that a release of the steam control member (21) causes the feed pump (7) to stop and the water supply to the steam generating chamber (17) to be interrupted.

9. Ironing appliance (2) according to any one of claims 1 to 8, wherein the steam control member (21) is a steam control trigger.

10. Ironing appliance (2) according to any one of claims 1 to 9, wherein, when the supply of water to the steam generating chamber (17) is interrupted, the flow control circuit (25) counts an interruption time (Ti) of the water supply to the steam generating chamber (17), and the average flow rate of the feed pump (7), which is defined by the flow control circuit (25) during a new actuation of the steam control member (21), is then a function of the interruption time (Ti) of the water supply to the steam generating chamber (17).

11. Ironing appliance (2) according to any one of claims 1 to 10, wherein the iron (3) further comprises an electric heating resistor (15) configured to heat the steam generating chamber (17) and a heating control circuit (24) configured to control the power supply of the electric heating resistor (15), the steam control member (21) being connected to the heating control circuit (24) and being configured to control the communication of an actuation signal to the heating control circuit (24) when the steam control member (21) is actuated, and in that the heating control circuit (24) is configured to change the power supply of the electric heating resistor (15) when an actuating signal is communicated to the heating control circuit (24).

12. Ironing appliance (2) according to claim 11, wherein the iron (3) comprises a temperature sensor (23) connected to the heating control circuit (24), the heating control circuit (24) being configured for regulating the power supply of the electric heating resistor (15) so as to bring the temperature of the temperature sensor (23) around a set temperature, and wherein, when the steam control member (21) is actuated and controls the water supply of the steam generating chamber (17), the value of the set temperature is automatically increased with respect to an initial setpoint value.

13. Ironing appliance (2) according to claim 12, wherein the temperature sensor (23) is configured to determine the temperature of the steam generating chamber (17).

14. Ironing appliance (2) according to claim 12 or 13, wherein when the supply of water to the steam generating chamber (17) is interrupted, the value of the set temperature is automatically reduced to the initial setpoint value.

15. Ironing appliance (2) according to any one of claims 12 to 14, wherein the initial setpoint value corresponds to a reference temperature adjustable by the user.

16. Ironing appliance (2) according to any one of claims 11 to 15, wherein the heating control circuit (24) and the flow control circuit (25) are integrated in a microprocessor (26).

17. Ironing appliance (2) according to any one of claims 1 to 16, which further comprises a base (4) on which the iron (3) is placed during inactive ironing phases.

18. Ironing appliance (2) according to any one of claims 1 to 17, wherein the iron (3) comprises an ironing sole plate (10) which is thermally bonded to the steam generating chamber (17) and is provided with at least one steam outlet (12) fluidly connected to the steam generating chamber (17).
